# EUROPEAN PATENT APPLICATION

(11) **EP 4 813 836 A1**
(43) Date of publication of application: **30.09.2026**
(21) Application number: 26154145.2
(22) Date of filing: 26.01.2026
(51) Int. Cl.: B64D 11/02

(54) **LAVATORY SYSTEM FOR AN INTERNAL CABIN OF A VEHICLE**

(30) Priority: 28.03.2025 US 202519093481
(71) Applicant: The Boeing Company, Arlington, VA 22202 (US)
(72) Inventor: ANDERSON, Anthony Earl, Arlington, 22202 (US); YOUNG, David Andrew, Arlington, 22202 (US)
(74) Representative: Boult Wade Tennant LLP

(57) **Abstract**

A lavatory system is configured to be disposed within an internal cabin of a vehicle. The lavatory system includes a floor. One or more walls upwardly extend from the floor. A passage is formed in the one or more walls. An interior chamber is defined between the floor, the one or more walls, and a ceiling. A door is moveably coupled to the one or more walls. The door is configured to be moved between a closed position, in which the passage is closed, and an open position, in which the passage is open. The door in the open position is outside of the interior chamber. The door is configured to move away from the interior chamber from the closed position to the open position. A toilet is within the interior chamber. A countertop is within the interior chamber. A sink and a faucet are secured to the countertop.

## Description

### FIELD OF THE DISCLOSURE

Examples of the present disclosure generally relate to lavatory systems for an internal cabin of a vehicle, such as a commercial aircraft.

### BACKGROUND OF THE DISCLOSURE

Commercial aircraft are used to transport passengers between various locations. A typical commercial aircraft includes one or more lavatories within an internal cabin.

Known lavatories within internal cabins of commercial aircraft are typically not configured to accommodate a person of reduced mobility using his/her own personal wheelchair. That is, a standard wheelchair is not able to fit through a passage of such lavatories. Instead, the wheelchair is typically stored within a baggage or cargo area, and specialized transfer seats are used to convey the individual from a seating area within the internal cabin to the lavatory.

### SUMMARY OF THE DISCLOSURE

A need exists for a lavatory within a commercial aircraft that is configured to be used by a person of reduced mobility using his/her own personal wheelchair, instead of a specialized transfer chair. Further, a need exists for a lavatory within a commercial aircraft that can be readily, easily, and independently used by all individuals, particularly persons of reduced mobility.

With those needs in mind, certain examples of the present disclosure provide a lavatory system configured to be disposed within an internal cabin of a vehicle. The lavatory system includes a floor. One or more walls upwardly extends from the floor. A passage is formed in the one or more walls. An interior chamber is defined between the floor, the one or more walls, and a ceiling. A door is moveably coupled to the one or more walls. The door is configured to be moved between a closed position, in which the passage is closed, and an open position, in which the passage is open. The door in the open position is outside of the interior chamber. The door is configured to move away from the interior chamber from the closed position to the open position. A toilet is within the interior chamber. A countertop is also within the interior chamber. A sink and a faucet are secured to the countertop.

In at least one example, the toilet is angled with respect to a longitudinal axis and a lateral axis of the floor. For example, a central longitudinal plane of the toilet is at an angle between 30-60 degrees with respect to the longitudinal axis of the floor.

In at least one example, the one or more walls include a first lateral wall, a second lateral wall opposite the first lateral wall, a first end wall, and a second end wall opposite the first end wall. As a further example, the toilet is proximate to a junction of the second lateral wall and the second end wall.

In at least one example, the toilet is distally located from the passage and the door.

In at least one example, the sink is angled in relation to a longitudinal axis and a lateral axis of the floor.

In at least one example, the lavatory system also includes a support rail extending from the one or more walls. For example, the support rail includes a first segment extending from the countertop proximate to the sink. A first curved segment extends from the first segment. The first curved segment curves in relation to a first junction of an end wall and a lateral wall. A second segment extends from the first curved segment. The second segment extends outwardly from the lateral wall. A second curved segment extends from the second segment. The second curved segment curves in relation to a second junction of the lateral wall and another end wall. A third segment extends from the second curved segment. The third segment extends outwardly from the other end wall.

The lavatory system can also include one or more vertical support bars extending from the one or more walls.

In at least one example, the door is configured to fold into the open position.

In at least one example, a length of the passage is at least 39 inches (at least 99 cm).

The lavatory system can also include a mirror secured to the one or more walls. The mirror has one or more portions that conform to a shape of one or both of the ceiling or the one or more walls.

In at least one example, the toilet and the sink are at one end of the interior chamber.

Certain examples of the present disclosure provide a vehicle including an internal cabin, and a lavatory system within the internal cabin, as described herein.

### BRIEF DESCRIPTION OF THE DRAWINGS

Figure 1 illustrates a perspective front view of an aircraft, according to an example of the present disclosure.
Figure 2 illustrates an isometric top internal view of a lavatory system, according to an example of the present disclosure.
Figure 3 illustrates an isometric lower internal view of the lavatory system of Figure 2.
Figure 4 illustrates an isometric external view of the lavatory system of Figure 2.
Figure 5 illustrates an isometric internal view of the lavatory system of Figure 2.
Figure 6 illustrates a top view of an individual on a wheelchair entering the lavatory system.
Figure 7 illustrates a top view of the individual on the wheelchair using a sink within the lavatory system.
Figure 8 illustrates a top view of the individual on the wheelchair in a transfer position in relation to a toilet within the lavatory system.
Figure 9 illustrates a top view of the individual on the wheelchair being assisted by another individual within the lavatory system.
Figure 10 illustrates a top view of the individual on the wheelchair leaving the lavatory system.
Figure 11 illustrates a top plan view of a lavatory system, according to an example of the present disclosure.
Figure 12 illustrates a top plan view of a lavatory system, according to an example of the present disclosure.
Figure 13 illustrates a top plan view of a lavatory system, according to an example of the present disclosure.
Figure 14 illustrates a top plan view of a lavatory system, according to an example of the present disclosure.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of the present disclosure provide a lavatory system for an internal cabin of a vehicle, such as a commercial aircraft. The lavatory system is particularly well-suited for use by persons of reduced mobility who prefer to utilize their own personal wheelchairs, instead of specialized transfer chairs. As described herein, the lavatory system provides an expansion of features and elements that enable use by a broad community of passengers, including persons of reduced mobility. The lavatory system allows for autonomous movement between a passenger seating area and the lavatory system, and provides sufficient space for use from personal mobility devices, such as standard or electric wheelchairs.

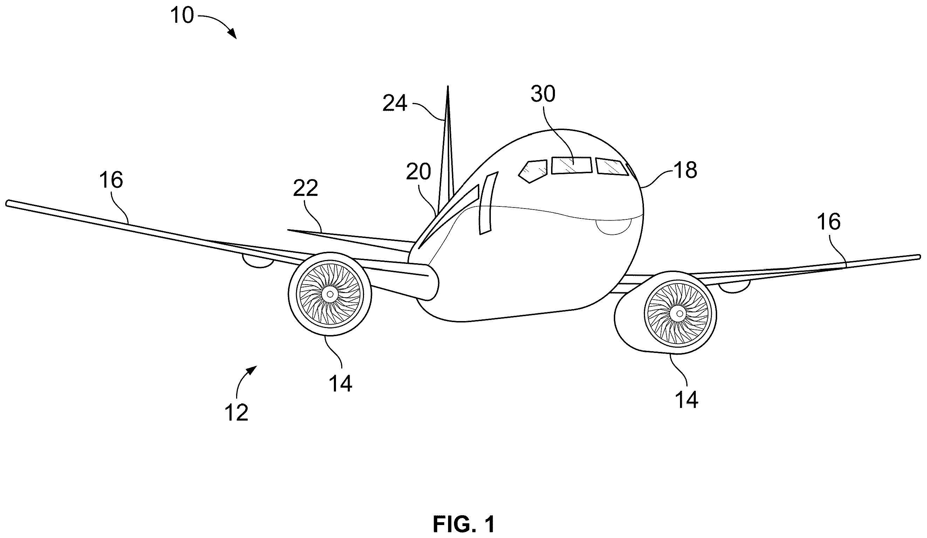

Figure 1 illustrates a perspective front view of an aircraft 10, according to an example of the present disclosure. The aircraft 10 includes a propulsion system 12 that includes engines 14, for example. Optionally, the propulsion system 12 may include more engines 14 than shown. The engines 14 are carried by wings 16 of the aircraft 10. In other examples, the engines 14 may be carried by a fuselage 18 and/or an empennage 20. The empennage 20 may also support horizontal stabilizers 22 and a vertical stabilizer 24.

The fuselage 18 of the aircraft 10 defines an internal cabin 30, which includes a flight deck or cockpit, one or more work sections (for example, galleys, personnel carry-on baggage areas, and the like), one or more passenger sections (for example, first class, business class, and coach sections), one or more lavatories, and/or the like. Optionally, instead of an aircraft, examples of the present disclosure may be used with various other vehicles, such as automobiles, buses, locomotives and train cars, watercraft, and the like. Further, examples of the present disclosure may be used with respect to fixed structures, such as commercial and residential buildings.

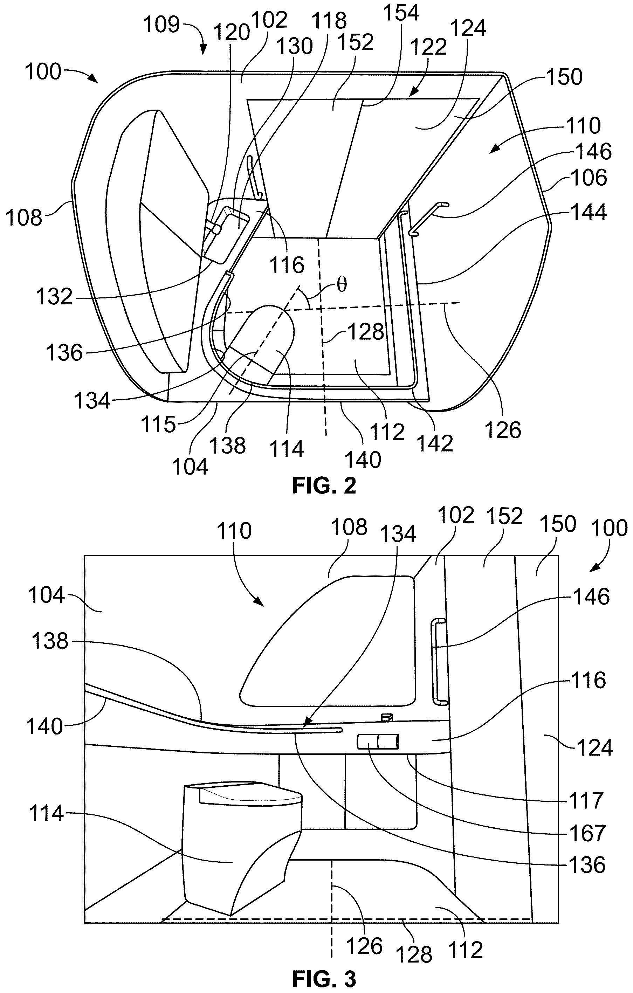

Figure 2 illustrates an isometric top internal view of a lavatory system 100, according to an example of the present disclosure. The lavatory system 100 is configured to be disposed within an internal cabin of a vehicle, such as the aircraft 10 shown in Figure 1. The lavatory system 100 is a monument, which is secured within the internal cabin. For example, the lavatory system 100 can include fittings extending from a lower surface. The fittings are configured to be retained by seat tracks, which extend along a length of the internal cabin. Optionally, the lavatory system 100 is configured to be secured within the internal cabin without the use of fittings and seat tracks.

The lavatory system 100 includes a first lateral wall 102 opposite from a second lateral wall 104. In at least one example, the second lateral wall 104 can be a side wall of the internal cabin of the vehicle. In at least one other example, the second lateral wall 104 can be a separate and distinct wall. The first lateral wall 102 and the second lateral wall 104 connect to a first end wall 106 and a second end wall 108 opposite from the first end wall 106. Optionally, the lavatory system 100 can be oriented such that the first lateral wall 102 and the second lateral wall 104 are end walls, and the first end wall 106 and the second end wall 108 are lateral walls.

The walls 102, 104, 106, and 108 extend upwardly from a floor 112 and connect to a ceiling (not shown in Figure 2). An interior chamber 110 is defined between the floor 112, the first lateral wall 102, the second lateral wall 104, the first end wall 106, the second end wall 108, and the ceiling.

The floor 112 supports a toilet 114. A countertop 116 extends between an interior surface of the first lateral wall 102 and an interior surface of the second end wall 108. The countertop 116 provides a level surface, which can be parallel with the floor 112. A sink 118 and faucet 120 are secured to the countertop 116. The faucet 120 is configured to flow water into the sink 118.

A passage 122 (such as an opening defined by a frame) is formed in the first lateral wall 102. The passage 122 is configured to allow movement of individuals into and out of the interior chamber 110 of the lavatory system 100. A door 124 is moveably coupled to the first lateral wall 102 within the passage 122. The door 124 is configured to be moved between a closed position, as shown in Figure 2, and an open position.

As shown, the toilet 114 is angled with respect to a longitudinal axis 126 and a lateral axis 128 of the floor 112. For example, a central longitudinal plane 115 of the toilet 114 is at an angle Θ with respect to the longitudinal axis 128. In at least one example, the angle Θ is between 30-60 degrees. In some examples, the angle Θ is between 40-50 degrees.

As shown in Figure 2, the toilet 114 is disposed proximate to a junction of the second end wall 108 and the second lateral wall 104. As such, the toilet 114 is distally located from (for example, as far away as possible while still within the interior chamber 110) the passage 122 and the door 124. The toilet 114 is positioned to establish an optimal transfer position that minimizes the exterior size and envelope of the lavatory system 100. In particular, by locating the toilet 114 at the angle Θ, distally away from the door 124, persons of reduced mobility using wheelchairs are able to easily enter into the interior chamber 110 while on the wheelchair, and transfer onto the toilet 114 while the wheelchair remains in the interior chamber 110.

The countertop 116 recesses away from the first lateral wall 102 toward the second end wall 108. The sink 118 is angled (that is, not orthogonal, but at an angle other than 0 degrees or 90 degrees) in relation to the longitudinal axis 126 and the lateral axis 128 of the floor 112. The sink 118 has a first end 130 and a second end 132. The first end 130 is closer to the passage 122 than the second end 132. The second end 132 is closer to the second end wall 108 than the first end 130. As such, the sink 118, which is angled in relation to the longitudinal axis 126 and the lateral axis 128 of the floor 112, also recesses away from the first lateral wall 102 toward the second end wall 108. The angled sink 118 provides access for all individuals, whether standing, or sitting or from the toilet, as needed.

Figure 3 illustrates an isometric lower internal view of the lavatory system 100 of Figure 2. Referring to Figures 2 and 3, a support rail 134, which has a central axis that is parallel with a plane of the floor 112, extends from the countertop 116 along the second lateral wall 104, and to the first end wall 106. The support rail 134 includes a first segment 136 (such as a linear segment) that extends outwardly from the countertop 116 proximate to the sink 118. A curved segment 138 extends from the first segment 136, and curves in relation to (such as in front of) a junction of the second end wall 108 and the second lateral wall 104. A second segment 140 (such as a linear segment) extends from the curved segment 138 outwardly from the second lateral wall 104. The second segment 140 extends to the first end wall 106. In at least one example, the support rail 134 also includes a curved segment 142 connecting to the second segment 140. The curved segment 142 curves in relation to a junction of the second lateral wall 104 and the first end wall 104. The curved segment 142 connects to a third segment 144 (such as a linear segment), which extends outwardly from the first end wall 106. As such, the support rail 134 extends outwardly from internal surfaces and along one or more walls of the lavatory system 100. As shown, the support rail 134 extends outwardly from internal surfaces of the first end wall 106, the second lateral wall 104, and the second end wall 108.

The support rail 134 provides a structure which can be grasped by an individual within the interior chamber 110. The individual can grasp the support rail 134 to provide steady support at various locations within the lavatory system 100.

Optionally, the support rail 134 can extend from less portions than shown. For example, the support rail 134 may not extend outwardly from the first end wall 106.

As shown, a vertical support bar 146 can outwardly extend from the first end wall 106 proximate to the passage 122. The vertical support bar 146 can be perpendicular to the support rail 134. The support bar 146 provides additional structure for an individual to grasp for support within the lavatory system 100. The lavatory system 100 can include additional vertical support bars at other locations. For example, a vertical support bar 146 can extend from the first lateral wall 102 over a portion of the countertop 116. Optionally, the lavatory system may not include a vertical support bar.

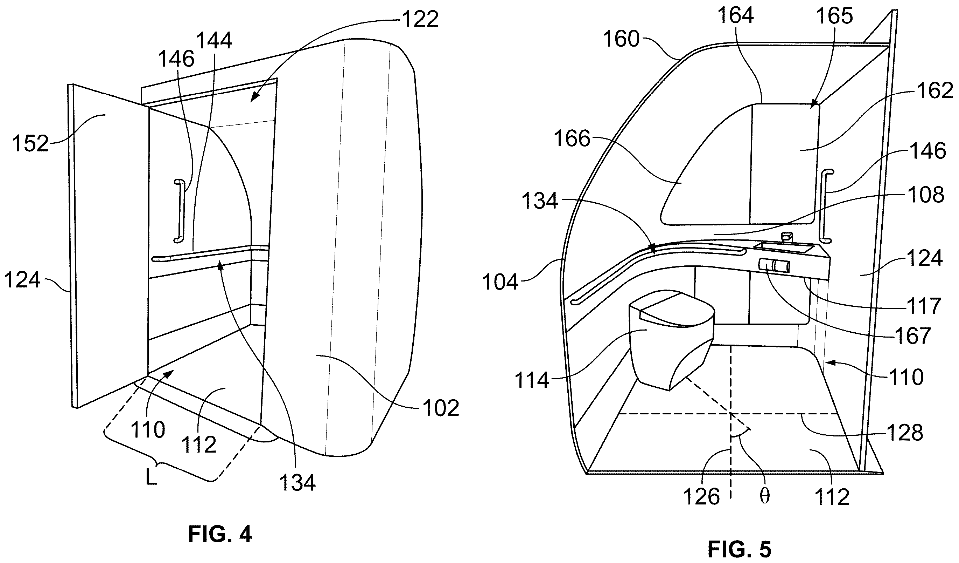

Figure 4 illustrates an isometric external view of the lavatory system 100 of Figure 2. Referring to Figures 2-4, the door 124 includes a first panel 150 coupled to a second panel 152 through a central hinge 154 (such as a vertical hinge). The door 124 is configured to be moved between a closed position, as shown in Figures 2 and 3, and an open position, as shown in Figure 4. The door 124 folds into the open position, such that the first panel 150 and the second panel 152 pivot about the central hinge 154, so that the second panel 152 folds against the first panel 150 in the open position. When the door 124 is moved from the open position to the closed position, the first panel 150 and the second panel 152 unfold about the central hinge 154 to close the passage 122.

As described herein the door 124 is moveably coupled to one or more walls, such as the first lateral wall 102. The door 124 is configured to be moved between a closed position, in which the passage 122 is closed, and an open position, in which the passage 122 is open. The door 124 in the open position is outside of the interior chamber 110. The door 124 is configured to move away from the interior chamber 110 from the closed position to the open position.

As shown in Figure 4, the door 124 opens outwardly from the lavatory system 100, such as into an aisle of an internal cabin. The door 124 opens away from the interior chamber 110. As such, when the door 124 is opened, the door 124 is not within the interior chamber 110 of the lavatory system 100. By opening outwardly away from the interior chamber 110, the door 124 frees up space within the interior chamber 110. Consequently, whether the door 124 is in the closed position or the open position, there is additional space within the interior chamber 110 (as compared to conventional lavatories) for individuals to maneuver.

A length L of the passage 122 is sized to allow an individual on a wheelchair to easily pass into and out of the interior chamber 110 of the lavatory system 100. In at least one example, the length L is 39 inches (99 cm), which is wider than passages of known aircraft lavatories. It has been found that a length L of 39 inches (99 cm) allows for efficient movement into and out of the lavatory system 100 by persons using wheelchairs. Optionally, the length L can be greater than 39 inches (such as 40-45 inches), or less than 39 inches (such as 36-38 inches). Expressed in SI units, equivalent, the length L can be greater than 99 cm (such as 102-114 cm), or less than 99 cm (such as 91-97cm).

In contrast to the known lavatories, the door 124 is wider, and does not extend into the interior chamber 110. As such, the door 124 (in the closed position and the open position) does not interfere with individuals within the interior chamber 110, such as persons of reduced mobility using wheelchairs.

Figure 5 illustrates an isometric internal view of the lavatory system 100 of Figure 2. As shown, a ceiling 160 can have a curved profile. The ceiling 160 can curve toward a junction with the second lateral wall 104.

The lavatory system 100 can also include a mirror 162 secured to the second end wall 108. The mirror 162 can extend to the ceiling 160, and have an upper portion 164 and an end portion 166 that conform to shapes of the ceiling 160 and/or the second lateral wall 104. The shape of the mirror 162, which conforms to the shape of the ceiling 160 and the second lateral wall 104, is aesthetically desirable, and appears to float within a soft, blended interior. In at least one example, a halo lighting assembly 165 can extend around the mirror 162, and emit light to provide an aesthetically-pleasing halo surround effect.

Referring to Figures 2-5, the support rail 134 provides a horizontally-oriented handrail that can be used (optionally with wayfinding elements) to assist individuals within the lavatory system 100. As a further example, the support rail 134 can be particularly well-suited for use by individuals with reduced vision to be guided to areas within the lavatory system 100. The support rail 134, which wraps around an interior space of the lavatory system 100, allows a blind individual to identify items, such as a flush button, located directly above or below the handrail. For example, the support rail 134 can include protuberances, such as shaped as arrows, which allow persons of reduced vision to identify various features within the lavatory system 100. The support rail 134 can include locators, such as protuberances, which provide indicators for a flush button, toilet paper locations, and other amenities. The protuberances can extend from a lower portion of the support rail 134. In at least one example, the protuberances can include raised dots, which are closer together at areas that are closer to the toilet 114.

In at least one example, maternity zones (for example, changing tables) level up from a durable base. The lavatory system 100 can further include customizable cabinet veneers, and atmospheric upper linings.

As shown, the lavatory system 100 also provides strategically located and integrated amenities and features, such as toilet paper 167 and tissues, which are within reach of an individual within the interior chamber 110.

All amenities including a height of the sink 118, a height of the mirror 162, location of the toilet paper 167, and the link are configured to meet the Americans with Disabilities Act (ADA) guidelines. The toilet 114 and the sink 118 are at one end 109 (shown in Figure 2, for example) of the interior chamber 110, thereby allowing different sizes of the lavatory system, such as via modification of the opposite wall (for example, the first end wall 106).

Previous aircraft lavatories are not configured for personal wheelchair use. In contrast, examples of the present disclosure provide lavatory systems having unique and optimized interior chambers 110, which are particularly well-suited for persons of reduced mobility using their personal wheelchairs (as have been favorably evaluated by a variety of individuals).

The lavatory systems described herein can also include an additional child seat, so as to provide a family-friendly lavatory. In at least one other example, the lavatory systems can include a built-in shower.

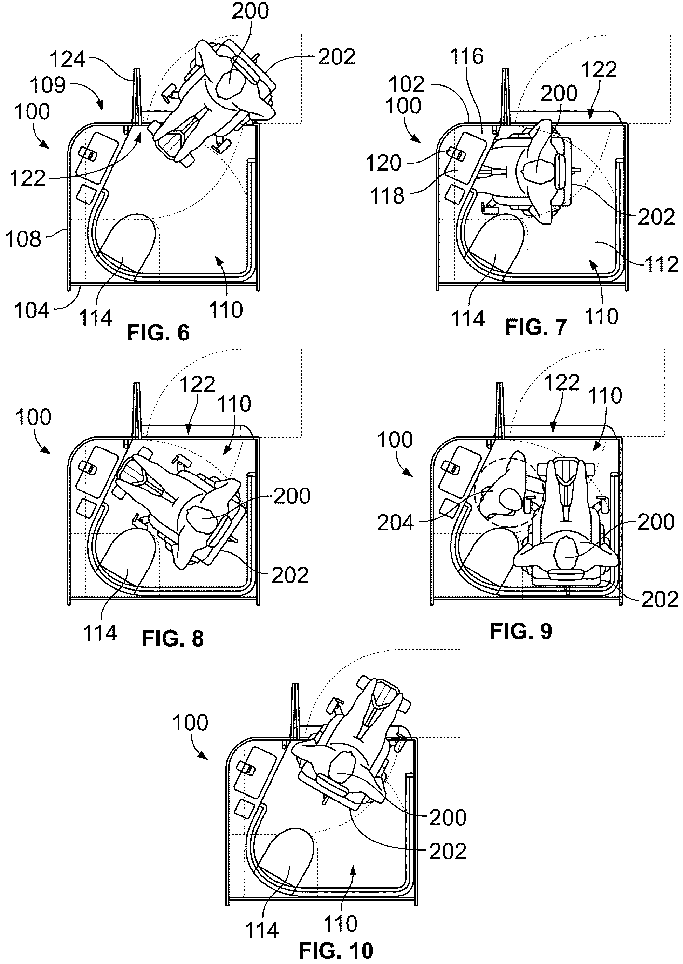

Figure 6 illustrates a top view of an individual 200 on a wheelchair 202 entering the lavatory system 100. The door 124 in the opened position is outside of the interior chamber 110, thereby allowing the individual 200 additional space within the interior chamber 110 to maneuver. Because the toilet 114 is distally located from the passage 122, such as at the junction of the second end wall 108 and the second lateral wall 104, the lavatory system 100 provides ample room for the individual 200 on the wheelchair 202 to move into the interior chamber 110.

Figure 7 illustrates a top view of the individual 200 on the wheelchair 202 using a sink within the lavatory system. Referring to Figures 3, 5, and 7, in particular, the countertop 116 does not extend to the floor 112, nor connect to a cabinet that extends to the floor 112. A lower edge 117 of the countertop 116 is at a height, which is above a height of a seat of a standard wheelchair. As such, the individual 200 can maneuver portions of legs, supported by the wheelchair 202, underneath the countertop 116, and easily use the sink 118 and the faucet 120. The angled orientation of the toilet 114 away from the passage 122 allows the wheelchair to be positioned between the toilet 114 and the first lateral wall 102.

Figure 8 illustrates a top view of the individual 200 on the wheelchair 202 in a transfer position in relation to the toilet 114 within the lavatory system 100. Figure 9 illustrates a top view of the individual 200 on the wheelchair 202 being assisted by another individual 204 within the lavatory system 100. Figure 10 illustrates a top view of the individual 200 on the wheelchair 202 leaving the lavatory system 100. As shown in Figures 8-10, the lavatory system 100 is sized, shaped, and configured to provide sufficient space for the wheelchair 202 to be maneuvered within the interior chamber 110.

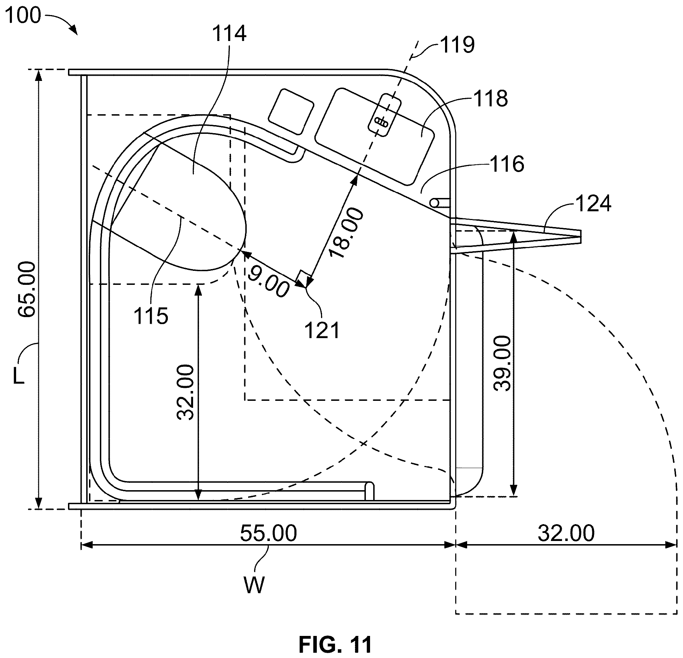

Figure 11 illustrates a top plan view of a lavatory system 100, according to an example of the present disclosure. Figure 11 shows exemplary, non-limiting dimensions of the lavatory system 100. As shown, the lavatory system 100 can have a length L of 65 inches (165 cm), and a width W of 55 inches (140 cm). The length of the passage can be 39 inches (99 cm). A central longitudinal plane 115 of the toilet 114 can perpendicularly intersect with a central longitudinal plane 119 of the sink 118 at a location 121 that is 9 inches (23 cm) from a front-most surface of the toilet 114, and 18 inches (46 cm) from a front surface of the countertop 116. As noted, the dimensions shown in Figure 11 are merely exemplary, but not limiting.

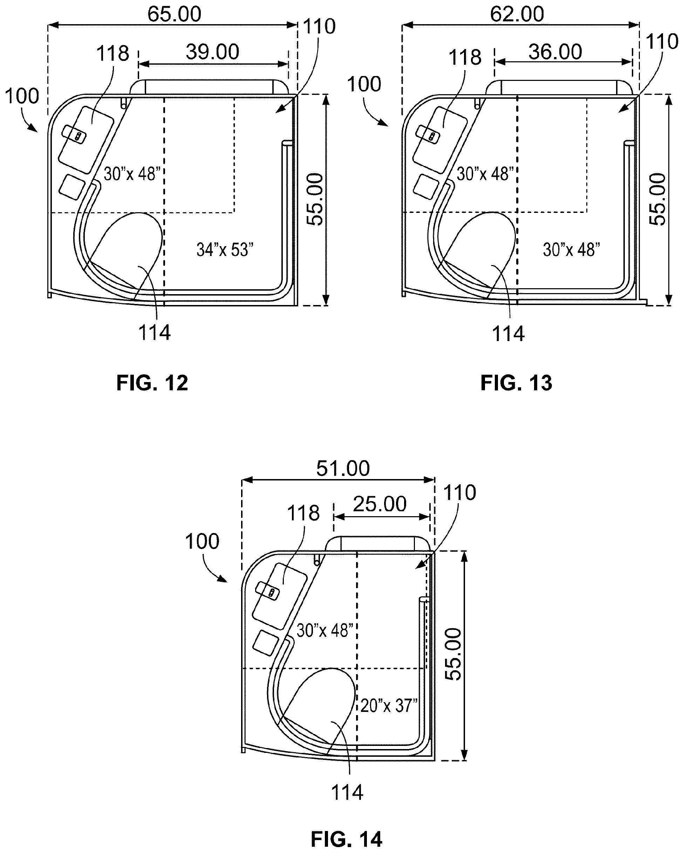

Figure 12 illustrates a top plan view of a lavatory system 100, according to an example of the present disclosure. Figure 12 shows exemplary, non-limiting dimensions of the lavatory system 100. The lavatory system 100 shown in Figure 12 is able to fully accommodate personal wheelchairs for the many individuals, and allows for increased maneuverability and accessibility.

Figure 13 illustrates a top plan view of a lavatory system 100, according to an example of the present disclosure. Figure 13 shows exemplary, non-limiting dimensions of the lavatory system 100.

Figure 14 illustrates a top plan view of a lavatory system 100, according to an example of the present disclosure. Figure 14 shows exemplary, non-limiting dimensions of the lavatory system 100. The example shown in Figure 14 is able to accommodate onboard transfer chairs, and smaller personal wheelchairs, but may not be able to accommodate larger, powered wheelchairs.

Figures 11-14 show examples and variations of the lavatory system 100. The dimensions shown are merely exemplary, but not limiting. The lavatory system 100 can be sized and shaped differently than shown in Figures 11-14.

Further, the disclosure comprises examples according to the following clauses:
Clause 1. A lavatory system configured to be disposed within an internal cabin of a vehicle, the lavatory system comprising:
   a floor;
   one or more walls upwardly extending from the floor;
   a passage formed in the one or more walls;
   a ceiling, wherein an interior chamber is defined between the floor, the one or more walls, and the ceiling;
   a door moveably coupled to the one or more walls, wherein the door is configured to be moved between a closed position, in which the passage is closed, and an open position, in which the passage is open, wherein the door in the open position is outside of the interior chamber, and wherein the door is configured to move away from the interior chamber from the closed position to the open position;
   a toilet within the interior chamber; and
   a countertop within the interior chamber, wherein a sink and a faucet are secured to the countertop.
Clause 2. The lavatory system of Clause 1, wherein the toilet is angled with respect to a longitudinal axis and a lateral axis of the floor.
Clause 3. The lavatory system of Clause 2, wherein a central longitudinal plane of the toilet is at an angle between 30-60 degrees with respect to the longitudinal axis of the floor.
Clause 4. The lavatory system of any of Clauses 1-3, wherein the one or more walls comprise:
   a first lateral wall;
   a second lateral wall opposite the first lateral wall;
   a first end wall; and
   a second end wall opposite the first end wall,
   wherein the toilet is proximate to a junction of the second lateral wall and the second end wall.
Clause 5. The lavatory system of any of Clauses 1-4, wherein the toilet is distally located from the passage and the door.
Clause 6. The lavatory system of any of Clauses 1-5, wherein the sink is angled in relation to a longitudinal axis and a lateral axis of the floor.
Clause 7. The lavatory system of any of Clauses 1-6, further comprising a support rail extending from the one or more walls.
Clause 8. The lavatory system of Clause 7, wherein the support rail comprises:
   a first segment extending from the countertop proximate to the sink;
   a first curved segment extending from the first segment, wherein the first curved segment curves in relation to a first junction of an end wall and a lateral wall;
   a second segment extending from the first curved segment, wherein the second segment extends outwardly from the lateral wall;
   a second curved segment extending from the second segment, wherein the second curved segment curves in relation to a second junction of the lateral wall and another end wall; and
   a third segment extending from the second curved segment, wherein the third segment extends outwardly from the other end wall.
Clause 9. The lavatory system of any of Clauses 1-8, further comprising one or more vertical support bars extending from the one or more walls.
Clause 10. The lavatory system of any of Clauses 1-9, wherein the door is configured to fold into the open position.
Clause 11. The lavatory system of any of Clauses 1-10, wherein a length of the passage is at least 39 inches (at least 99 cm).
Clause 12. The lavatory system of any of Clauses 1-11, further comprising a mirror secured to the one or more walls, wherein the mirror has one or more portions that conform to a shape of one or both of the ceiling or the one or more walls.
Clause 13. The lavatory system of any of Clauses 1-12, wherein the toilet and the sink are at one end of the interior chamber.
Clause 14. A vehicle comprising:
   an internal cabin; and
   a lavatory system within the internal cabin, the lavatory system including:
      a floor;
      one or more walls upwardly extending from the floor;
      a passage formed in the one or more walls;
      a ceiling, wherein an interior chamber is defined between the floor, the one or more walls, and the ceiling;
      a door moveably coupled to the one or more walls, wherein the door is configured to be moved between a closed position, in which the passage is closed, and an open position, in which the passage is open, wherein the door in the open position is outside of the interior chamber, and wherein the door is configured to move away from the interior chamber from the closed position to the open position;
      a toilet within the interior chamber; and
      a countertop within the interior chamber, wherein a sink and a faucet are secured to the countertop.
Clause 15. The vehicle of Clause 14, wherein the toilet and the sink are at one end of the interior chamber, wherein the toilet is angled with respect to a longitudinal axis and a lateral axis of the floor, wherein a central longitudinal plane of the toilet is at an angle between 30-60 degrees with respect to the longitudinal axis of the floor, and wherein the sink is angled in relation to the longitudinal axis and the lateral axis of the floor.
Clause 16. The vehicle of Clauses 14 or 15, wherein the one or more walls comprise:
   a first lateral wall;
   a second lateral wall opposite the first lateral wall;
   a first end wall; and
   a second end wall opposite the first end wall,
   wherein the toilet is proximate to a junction of the second lateral wall and the second end wall, and wherein the toilet is distally located from the passage and the door.
Clause 17. The vehicle of any of Clauses 14-16, further comprising:
   a support rail extending from the one or more walls;
   one or more vertical support bars extending from the one or more walls; and
   a mirror secured to the one or more walls, wherein the mirror has one or more portions that conform to a shape of one or both of the ceiling or the one or more walls.
Clause 18. The vehicle of Clause 17, wherein the support rail comprises:
   a first segment extending from the countertop proximate to the sink;
   a first curved segment extending from the first segment, wherein the first curved segment curves in relation to a first junction of an end wall and a lateral wall;
   a second segment extending from the first curved segment, wherein the second segment extends outwardly from the lateral wall;
   a second curved segment extending from the second segment, wherein the second curved segment curves in relation to a second junction of the lateral wall and another end wall; and
   a third segment extending from the second curved segment, wherein the third segment extends outwardly from the other end wall.
Clause 19. The vehicle of any of Clauses 14-18, wherein the door is configured to fold into the open position, wherein a length of the passage is at least 39 inches (a least 99 cm).
Clause 20. A lavatory system configured to be disposed within an internal cabin of a vehicle, the lavatory system comprising:
   a floor;
   a first lateral wall extending upwardly from the floor;
   a second lateral wall extending upwardly from the floor, wherein the second lateral wall is opposite the first lateral wall;
   a first end wall extending upwardly from the floor; and
   a second end wall extending upwardly from the floor, wherein the second end wall is opposite the first end wall,
   a passage formed in the first lateral wall, wherein a length of the passage is at least 39 inches (at least 99 cm);
   a ceiling, wherein an interior chamber is defined between the floor, the first lateral wall, the second lateral wall, the first end wall, the second end wall, and the ceiling;
   a door moveably coupled to the first lateral wall, wherein the door is configured to be moved between a closed position, in which the passage is closed, and an open position, in which the passage is open, wherein the door in the open position is outside of the interior chamber, wherein the door is configured to move away from the interior chamber from the closed position to the open position, and wherein the door is configured to fold into the open position;
   a toilet within the interior chamber, wherein the toilet is distally located from the passage and the door, wherein the toilet is proximate to a junction of the second lateral wall and the second end wall, wherein the toilet is angled with respect to a longitudinal axis and a lateral axis of the floor, and wherein a central longitudinal plane of the toilet is at an angle between 30-60 degrees with respect to the longitudinal axis of the floor;
   a countertop within the interior chamber, wherein a sink and a faucet are secured to the countertop, wherein the sink is angled in relation to the longitudinal axis and the lateral axis of the floor, and wherein the toilet and the sink are at one end of the interior chamber;
   a mirror secured to the second end wall, wherein the mirror has one or more portions that conform to a shape of one or both of the ceiling or the second lateral wall;
   one or more vertical support bars extending from one or more of the first lateral wall, the second lateral wall, the first end wall, or the second end wall; and
   a support rail comprising:
      a first segment extending from the countertop proximate to the sink;
      a first curved segment extending from the first segment, wherein the curved segment curves in relation to a first junction of the second end wall and the second lateral wall;
      a second segment extending from the first curved segment, wherein the second segment extends outwardly from the second lateral wall;
      a second curved segment extending from the second segment, wherein the second curved segment curves in relation to a second junction of the second lateral wall and the first end wall; and
      a third segment extending from the second curved segment, wherein the third segment extends outwardly from the first end wall.

As described herein, examples of the present disclosure provide lavatory systems within a commercial aircraft that are configured to be used by persons of reduced mobility using their own personal wheelchairs. Further, examples of the present disclosure provide lavatory systems that can be readily, easily, and independently used by all individuals, particularly persons of reduced mobility.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For instance, the above-described examples (and/or features thereof) can be used in combination with each other. In addition, many modifications can be made to adapt a particular situation or material to the teachings of the various examples of the disclosure without departing from the scope of the claims. While the dimensions and types of materials described herein are intended to define the parameters of the various examples of the disclosure, the examples are by no means limiting and are exemplary. Many other examples will be apparent to those of skill in the art upon reviewing the above description. The scope of the various examples of the disclosure should, therefore, be determined with reference to the appended claims. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects.

This written description discloses various examples of the disclosure, including the best mode, to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or have insubstantial differences from the literal language of the claims.

## Claims

1. A lavatory system (100) configured to be disposed within an internal cabin of a vehicle, the lavatory system (100) comprising:
a floor (112);
one or more walls upwardly extending from the floor (112);
a passage (122) formed in the one or more walls;
a ceiling, wherein an interior chamber (110) is defined between the floor (112), the one or more walls, and the ceiling;
a door moveably coupled to the one or more walls, wherein the door is configured to be moved between a closed position, in which the passage (122) is closed, and an open position, in which the passage (122) is open, wherein the door in the open position is outside of the interior chamber (110), and wherein the door is configured to move away from the interior chamber (110) from the closed position to the open position;
a toilet (114) within the interior chamber (110); and
a countertop (116) within the interior chamber (110), wherein a sink (118) and a faucet (120) are secured to the countertop (116).

2. The lavatory system (100) of claim 1, wherein the toilet (114) is angled with respect to a longitudinal axis (126) and a lateral axis (128) of the floor (112).

3. The lavatory system (100) of claim 2, wherein a central longitudinal plane (115) of the toilet (114) is at an angle between 30-60 degrees with respect to the longitudinal axis (126) of the floor (112).

4. The lavatory system (100) of any preceding claim, wherein the one or more walls comprise:
a first lateral wall (102);
a second lateral wall (104) opposite the first lateral wall (102);
a first end wall (106); and
a second end wall (108) opposite the first end wall (106),
wherein the toilet (114) is proximate to a junction of the second lateral wall (104) and the second end wall (108).

5. The lavatory system (100) of any preceding claim, wherein the toilet (114) is distally located from the passage (122) and the door.

6. The lavatory system (100) of any preceding claim, wherein the sink (118) is angled in relation to a longitudinal axis (126) and a lateral axis (128) of the floor (112).

7. The lavatory system (100) of any preceding claim, further comprising a support rail (134) extending from the one or more walls.

8. The lavatory system (100) of claim 7, wherein the support rail (134) comprises:
a first segment (136) extending from the countertop (116) proximate to the sink (118);
a first curved segment (138,142) extending from the first segment (136), wherein the first curved segment (138,142) curves in relation to a first junction of an end wall and a lateral wall;
a second segment (140) extending from the first curved segment (138,142), wherein the second segment (140) extends outwardly from the lateral wall;
a second curved segment (138,142) extending from the second segment (140), wherein the second curved segment (138,142) curves in relation to a second junction of the lateral wall and another end wall; and
a third segment (144) extending from the second curved segment (138,142), wherein the third segment (144) extends outwardly from the other end wall.

9. The lavatory system (100) of any preceding claim, further comprising one or more vertical support bars (146) extending from the one or more walls.

10. The lavatory system (100) of any preceding claim, wherein the door is configured to fold into the open position.

11. The lavatory system (100) of any preceding claim, wherein a length of the passage (122) is at least 39 inches (at least 99 cm).

12. The lavatory system (100) of any preceding claim, further comprising a mirror secured to the one or more walls, wherein the mirror has one or more portions that conform to a shape of one or both of the ceiling or the one or more walls.

13. The lavatory system (100) of any preceding claim, wherein the toilet (114) and the sink (118) are at one end of the interior chamber (110).

14. A vehicle comprising:
an internal cabin; and
the lavatory system (100) of any preceding claim within the internal cabin.

15. An aircraft (10) comprising:
an internal cabin; and
the lavatory system (100) of any preceding claim within the internal cabin.
